# EUROPÄISCHE PATENTSCHRIFT

(11) **EP 3 122 563 B1**
(45) Veröffentlichungstag und Bekanntmachung des Hinweises auf die Patenterteilung: **21.03.2018**
(21) Anmeldenummer: 15709866.6
(22) Anmeldetag: 02.03.2015
(51) Int. Cl.: B65H 1/06, B65H 3/24, B65H 3/30, B41J 3/407, B65G 59/06

(54) **VORRICHTUNG ZUR BESCHRIFTUNG VON KENNZEICHNUNGSEINHEITEN**
DEVICE FOR INSCRIPTION OF IDENTIFICATION UNITS
DISPOSITIF DE MARQUAGE D'UNITÉS D'IDENTIFICATION

(30) Priorität: 27.03.2014 DE 102014004353
(43) Veröffentlichungstag der Anmeldung: 01.02.2017
(73) Patentinhaber: Murrplastik Systemtechnik GmbH, 71570 Oppenweiler (DE)
(72) Erfinder: BIER, Klaus-Dieter, 71397 Leutenbach (DE)
(74) Vertreter: Patentanwälte Bregenzer und Reule Partnerschaftsgesellschaft mbB
(86) Internationale Anmeldenummer: PCT/EP2015/054267
(87) Internationale Veröffentlichungsnummer: WO 2015/144392

(56) Entgegenhaltungen:
- EP-A2- 0 885 824
- DE-U1-202012 101 998
- GB-A- 752 197
- JP-U- H0 196 446
- JP-U- S6 426 649
- US-A1- 2005 082 738

## Beschreibung

Die Erfindung betrifft eine Vorrichtung zur Beschriftung von Kennzeichnungseinheiten, wobei jede Kennzeichnungseinheit ein Kennzeichnungsschild oder mehrere, einstückig zusammenhängende Kennzeichnungsschilder aufweist. Kennzeichnungsschilder werden häufig zur Kennzeichnung von Bauelementen verwendet. Sie weisen hierzu eine Beschriftungsfläche auf, auf die eine Beschriftung aufgebracht werden kann, die das zu kennzeichnende Bauteil bezeichnet. Insbesondere Kabel werden häufig mit Kennzeichnungsschildern versehen, die beispielsweise mittels auf die Kabel aufgeschobener Tüllen befestigt werden und die Kabel kennzeichnende Beschriftungen tragen. Zur Anbringung der Beschriftung auf der jedem Kennzeichnungsschild eigenen Beschriftungsfläche sind verschiedenste Geräte bekannt, beispielsweise Laserdrucker, Thermotransferdrucker, Plotter oder Graviergeräte. Allen ist gemeinsam, dass die Kennzeichnungsschilder dem Beschriftungsgerät zugeführt werden müssen. Dies erfolgt meist manuell, indem die Kennzeichnungsschilder einzeln oder als Kennzeichnungsschildersätze einstückig zusammenhängend auf eine Auflagefläche aufgelegt und dort beschriftet werden. Dies ist aufwendig.

Eine Vorrichtung zur automatischen Entnahme von Kennzeichnungseinheiten aus einem Magazin und zum Weitertransport der Kennzeichnungseinheiten vom Magazin weg ist jeweils aus der EP 0 885 824 A2 und der DE 20 2012 101 998 U1 bekannt.

Es ist daher Aufgabe der Erfindung, eine Vorrichtung der eingangs genannten Art zu entwickeln, die eine einfachere Beschriftung der Kennzeichnungsschilder ermöglicht.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die Kennzeichnungseinheiten, die ein oder mehrere Kennzeichnungsschilder aufweisen, dem Beschriftungsgerät definiert zuzuführen und eine zuverlässige und einfach zu bedienende Möglichkeit bereitzustellen, die Kennzeichnungseinheiten in einen dem Transport zum Beschriftungsgerät und/oder zu einer Entnahmestelle dienenden Fallschacht einzuführen. Zu diesem Zweck ist eine Schieberanordnung vorgesehen, die mindestens ein Schieberelement aufweist, das über der Auflagefläche angeordnet ist in dem Sinne, dass es im Abstand zu ihr oder an ihr anliegend parallel zu ihr beweglich ist, und das von einer Rückzugsposition im Abstand zu einem zugehörigen Randabschnitt des Umfangsrands der Eintrittsöffnung in eine Vorschubposition verschiebbar ist, in der seine der Eintrittsöffnung zugewandte Kante mit dem zugehörigen Randabschnitt fluchtet oder über diesen hinausragt, so dass dieses Schieberelement die an der Auflagefläche anliegende Kennzeichnungseinheit so weit vorschieben kann, dass sie in die Eintrittsöffnung fällt. Vorzugsweise weist die Schieberanordnung zwei im Abstand zu einander angeordnete Schieberelemente auf, wobei diese in einem Abstand zueinander angeordnet sind, der größer ist als der gegenseitige Abstand der Randabschnitte und diesen vorzugsweise um mindestens 1 cm, nach Möglichkeit um mindestens 2 cm übersteigt, so dass beiderseits der Eintrittsöffnung genügend Platz zum Anlegen der Kennzeichnungseinheiten an der Auflagefläche vorhanden ist. Jedes der Schieberelemente ist dann von einer Rückzugsposition im Abstand zum zugehörigen Randabschnitt in eine Vorschubposition verschiebbar, in der seine der Eintrittsöffnung zugewandte Kante mit dem zugehörigen Randabschnitt fluchtet oder über diesen hinausragt. Gemäß einer vorteilhaften Weiterbildung ist der gegenseitige Abstand der Schieberelemente mindestens so groß wie der gegenseitige Abstand der der Auflagefläche zugewandten Ränder der Führungswände. Der Abstand der Führungswände kann, insbesondere in dem der Auflagefläche zugewandten Bereich, so auf die Größe der Kennzeichnungseinheiten abgestimmt werden, dass diese zwischen den Führungswänden mit geringem Spiel geführt sind und bei Auftreten von quer zur Förderrichtung wirkenden Kräften nicht oder nur wenig ausweichen können. Die jeweils an der Auflagefläche anliegende Kennzeichnungseinheit wird dann zwischen den Schieberelementen positioniert und kann durch abwechselndes Vorschieben der Schieberelemente in deren jeweilige Vorschubposition über die Eintrittsöffnung in den Fallschacht geschoben werden. Die Beschriftung kann im Fallschacht erfolgen, indem die Kennzeichnungseinheiten dort an einer Stelle definiert positioniert werden, oder es kann die jeweils an der Auflagefläche anliegende Kennzeichnungseinheit durch die Eintrittsöffnung an ihrer Beschriftungsfläche bzw. an ihren Beschriftungsflächen beschriftet werden.

Zweckmäßig weist jedes Schieberelement senkrecht zur Auflagefläche gemessen eine geringere Dicke auf als die Kennzeichnungseinheiten. Dadurch wird sichergestellt, dass bei einem Vorschub des Schieberelements oder der Schieberelemente jeweils nur die an der Auflagefläche anliegende Kennzeichnungseinheit verschoben wird, ohne dass Vorkehrungen getroffen werden müssen, die übrigen im Magazin befindlichen Kennzeichnungseinheiten zurückzuhalten. Sind zwei Schieberelemente vorhanden, so können diese einzeln beweglich sein. Da sie aber immer abwechselnd vorgeschoben werden, wird bevorzugt, dass sie starr miteinander verbunden sind und vorzugsweise einstückig zusammenhängen, so dass der Vorschubprozess einfacher gestaltet werden kann. Zweckmäßig greift das mindestens eine Schieberelement durch mindestens einen Schlitz in der zugehörigen Führungswand durch.

Die einander gegenüberliegenden Randabschnitte der Eintrittsöffnung können zur Variation der Größe der Eintrittsöffnung gegeneinander beweglich sein. Dadurch ist die erfindungsgemäße Vorrichtung für Kennzeichnungseinheiten unterschiedlicher Größe verwendbar, die beiderseits der Eintrittsöffnung auf der Auflagefläche aufliegen. Insbesondere bei der Verwendung eines Laserbeschriftungsgeräts wird bevorzugt, dass das Beschriftungsgerät und der Fallschacht von einem Gehäuse umschlossen werden, so dass weder für das Auge des Benutzers gefährliche Laserstrahlen noch schädliche Dämpfe an die Umgebung gelangen. Das Magazin ist dann zweckmäßig lösbar mit dem Gehäuse verbunden oder lose in eine Halterung im Gehäuse eingesetzt, so dass es nach der Entleerung entnommen und durch ein gefülltes Magazin ersetzt werden kann. Dabei wird weiter bevorzugt, dass die Auflagefläche als Teil des Magazins fest mit den Führungswänden verbunden ist.

Gemäß einer bevorzugten Ausführungsform verlaufen die Führungswände senkrecht oder schräg von oben nach unten, und die Auflagefläche ist unter den Führungswänden angeordnet. Dies hat den Vorteil, dass die Kennzeichnungseinheiten nacheinander aufgrund ihrer Schwerkraft in die Eintrittsöffnung fallen können, ohne dass es hierfür einer weiteren Kraftbeaufschlagung bedarf. Gemäß einer alternativen Ausführungsform ist die Auflagefläche gegen die Horizontale geneigt und vorzugsweise vertikal ausgerichtet, so dass die Förderrichtung im wesentlichen horizontal oder mit leichter Neigung gegenüber der Horizontalen verläuft. In diesem Fall wird ein Vorschubelement zum Vorschieben der Kennzeichnungseinheiten in der Förderrichtung und zum Andrücken der Kennzeichnungseinheiten an die Auflagefläche benötigt, das zweckmäßig federunterstützt ist und die Kennzeichnungseinheiten vorschiebt, so dass die der Eintrittsöffnung am nächsten angeordnete Kennzeichnungseinheit in die Eintrittsöffnung gedrückt werden kann. Ein solches federunterstütztes Vorschubelement kann aber auch bei horizontaler Ausrichtung der Auflagefläche vorgesehen sein.

Gemäß einer vorteilhaften Weiterbildung der Erfindung weist eine erste der Führungswände zwei in Richtung zur zweiten Führungswand vorstehende, sich im Abstand zueinander in Förderrichtung erstreckende Führungsrippen auf. Dies ist insbesondere deshalb vorteilhaft, da die Kennzeichnungseinheiten, die von der Anmelderin hergestellt und vertrieben werden, zwar in unterschiedlichen Breiten hergestellt werden, aber auf einer Seite mit einem aus Beschriftungsplättchen gebildeten Kopfbereich versehen sind, der für jede Bauart eine identische Breite aufweist. Es können dann Kennzeichnungseinheiten gleicher Länge, aber unterschiedlicher Breite im Magazin aufgenommen werden, wobei deren Kopfteile zwischen den Führungsrippen geführt sind. Der Abstand der Führungsrippen zueinander verkleinert sich zweckmäßig in Richtung zur ersten Führungswand. Dadurch werden Einführschrägen gebildet, die ein Einlegen der Kopfteile zwischen den Führungsrippen erleichtern. Eine typische Kennzeichnungseinheit der Anmelderin ist in der DE 37 44 936 C2 beschrieben, auf die in diesem Zusammenhang Bezug genommen wird.

Es kann des Weiteren vorgesehen sein, dass mittels des Fallschachts die Kennzeichnungseinheiten zunächst dem Beschriftungsgerät zugeführt werden. Zu diesem Zweck ist im Fallschacht eine gegenüber der Horizontalen geneigte schiefe Ebene angeordnet, die als Rutschbahn für die Kennzeichnungseinheiten ausgebildet ist. An ihrem unteren Ende geht die Rutschbahn in eine Haltefläche über, die an mindestens einem unteren Rand mit einer nach oben vorstehenden Anschlagleiste oder anderen Positioniermitteln versehen ist, um eine die Rutschbahn heruntergerutschte Kennzeichnungseinheit definiert positionieren zu können. Eine solchermaßen auf der Haltefläche positionierte Kennzeichnungseinheit wird dort mittels des Beschriftungsgeräts an ihrer Beschriftungsfläche bzw. an ihren Beschriftungsflächen beschriftet, wozu das Beschriftungsgerät auf die Haltefläche gerichtet ist. Dabei ist es insbesondere möglich, dass die Haltefläche durch eine transparente Platte, vorzugsweise eine Glasplatte, gebildet wird und dass das Beschriftungsgerät einen vorzugsweise senkrecht auf die der Haltefläche abgewandte Oberfläche der Platte gerichteten Laser aufweist, so dass die Beschriftung durch die Haltefläche hindurch erfolgt. Vorteilhaft ist die Haltefläche gegenüber der Horizontalen in zwei Raumrichtungen geneigt und an zwei in ihrem untersten Punkt zusammenlaufenden Rändern jeweils mit einer nach oben vorstehenden Anschlagleiste versehen. Dies erlaubt eine präzisere Positionierung der Kennzeichnungseinheit bei der Beschriftung, da bei hinreichender Neigung in beiden Raumrichtungen sich die Kennzeichnungseinheit zwangsläufig so positioniert, dass sie mit einem Eck im untersten Punkt der Haltefläche zu liegen kommt. Um ein möglichst problemfreies Gleiten der Kennzeichnungseinheiten zu erzielen, ändert sich gemäß einem Ausführungsbeispiel die Neigung der Rutschbahn zumindest in dem in die Haltefläche übergehenden Endabschnitt kontinuierlich, bis sie mit der Neigung der Haltefläche identisch ist. Es wird zudem bevorzugt, dass die Haltefläche direkt an die Rutschbahn anschließt und mit dieser fluchtet.

Für einen Weitertransport der beschrifteten Kennzeichnungseinheiten kann mindestens eine der Anschlagleisten vorteilhaft zur Freigabe einer auf der Haltefläche liegenden Kennzeichnungseinheit beweglich sein. Bei Wegnahme der betreffenden Anschlagleiste kann die Kennzeichnungseinheit dann weiterrutschen, wobei insbesondere bevorzugt wird, dass sich an die Haltefläche ein weiterer, zu einer Entnahmestelle und/oder zu einem Aufnahmebehälter führender Abschnitt des Fallschachts anschließt. In dem Aufnahmebehälter werden die Kennzeichnungseinheiten nach der Beschriftung aufbewahrt, bis sie aus der Vorrichtung entnommen werden.

Im Folgenden wird die Erfindung anhand eines in der Zeichnung schematisch dargestellten Ausführungsbeispiels näher erläutert. Es zeigen
- Fig. 1a, 1b: eine Beschriftungsvorrichtung in zwei unterschiedlichen perspektivischen Darstellungen, jeweils mit teilweise demontiertem Gehäuse und ohne Beschriftungsgerät;

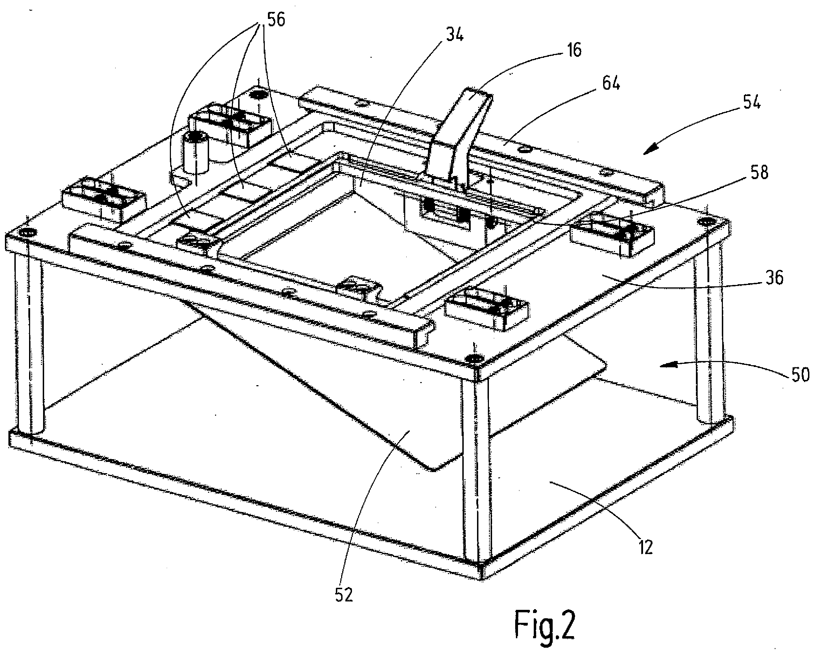

- Fig. 2: die Beschriftungsvorrichtung gemäß Fig. 1a ohne Magazin;
- Fig. 3: das Magazin gemäß Fig. 1a, 1b in perspektivischer Darstellung;
- Fig. 4: ein Magazin gemäß einem alternativen Ausführungsbeispiel und
- Fig. 5a bis: e eine schematische Darstellung der Funktionsweise der Beschriftungsvorrichtung gemäß Fig. 1a, 1b.

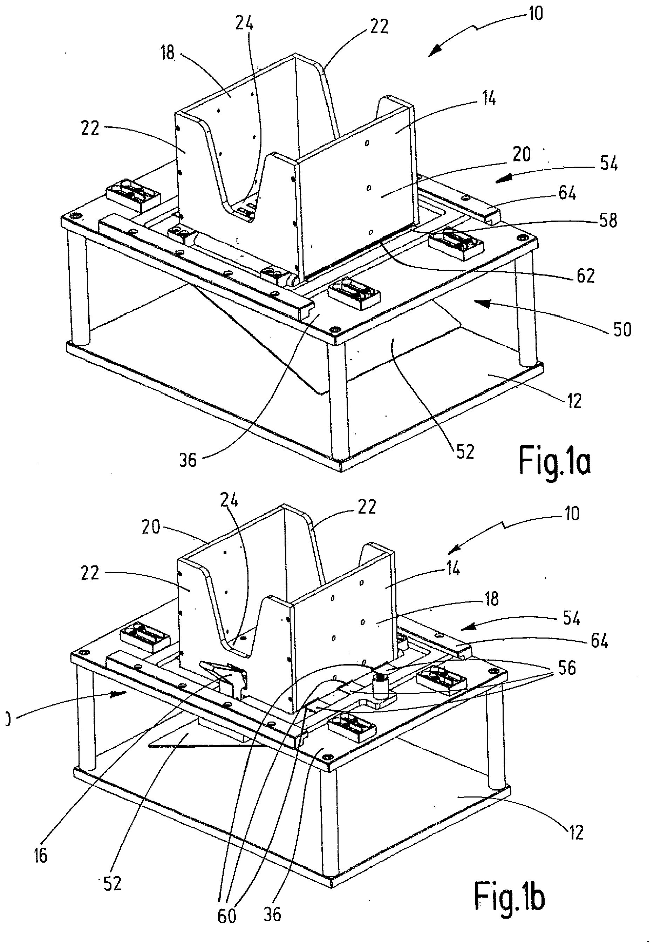

Die Beschriftungsvorrichtung 10 gemäß Fig. 1a, 1b weist ein in der Zeichnung nur teilweise dargestelltes Gehäuse 12 auf, in dem ein nicht dargestelltes Beschriftungsgerät aufgenommen ist. Auf das Gehäuse 12 ist ein Magazin 14 aufgesetzt und mittels eines Rasthakens 16 lösbar befestigt. Das Magazin 14 weist zwei vertikal angeordnete, im Abstand parallel zueinander verlaufende Führungswände 18, 20 auf, die mittels Querwänden 22 miteinander verbunden sind. In seinem unteren Bereich weist das Magazin 14 eine horizontal ausgerichtete Auflagefläche 24 auf, in der sich eine Eintrittsöffnung 26 befindet. Die Eintrittsöffnung 26 wird von einem Umfangsrand 28 umrandet, der zwei einander gegenüberliegende Randabschnitte 30 aufweist. Der Abstand der beiden Randabschnitte 30 zueinander ist kleiner als der Abstand der Führungswände 18, 20 zueinander bzw. ihrer unteren Ränder 32 zueinander, so dass die Auflagefläche 24 zweigeteilt ist in zwei Abschnitte, die sich jeweils von einem der Randabschnitte 30 zum unteren Rand 32 der zugehörigen Führungswand 18, 20 erstrecken. Unterhalb der Eintrittsöffnung 26 ist eine Öffnung 34 in einer Deckenwand 36 des Gehäuses 12 angeordnet, die mit der Eintrittsöffnung 26 kommuniziert und mindestens so groß ist wie diese.

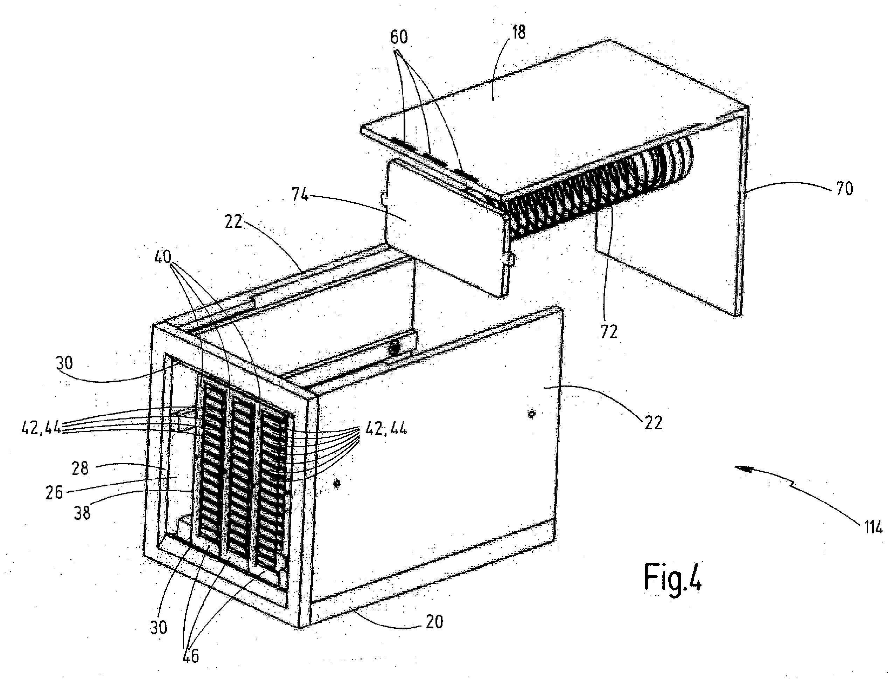

Das Magazin 14 ist dafür bestimmt, Kennzeichnungseinheiten wie beispielsweise Kennzeichnungsschildersätze 38 aufzunehmen, von denen einer beispielhaft in Fig. 4 angedeutet ist. Kennzeichnungsschildersätze 38 weisen eine Vielzahl von einstückig zusammenhängenden, an miteinander verbundenen Trägern 40 angeformten Kennzeichnungsschildern 42 aus Kunststoff auf, von denen jedes eine Beschriftungsfläche 44 aufweist. Am Ende jedes Trägers 40 ist ein Beschriftungsplättchen 46 angeformt. Die Beschriftungsflächen 44 sind so angeordnet, dass sie eine Beschriftungsebene aufspannen. Die Kennzeichnungsschildersätze 38 sind im Magazin 14 so aufgenommen, dass sie mit parallel zueinander ausgerichteten Beschriftungsebenen aufeinander aufliegen. Der Abstand der Führungswände 18, 20 zueinander ist etwas größer als die Länge der Kennzeichnungsschildersätze 42, so dass diese in einer Förderrichtung 48 zur Eintrittsöffnung 26 hin, die bei der Vorrichtung 10 gemäß Fig. 1a, 1b senkrecht nach unten verläuft, zwischen den Führungswänden 18, 20 mit etwas Spiel geführt werden. Die Beschriftungsplättchen 46 sind dabei der ersten Führungswand 18 zugewandt, welche in der Zeichnung nicht dargestellte, sich in der Förderrichtung 48 erstreckende und aus der ersten Führungswand 18 in Richtung zur zweiten Führungswand 20 vorstehende Führungsrippen aufweisen kann, zwischen denen die Beschriftungsplättchen 46 geführt sind.

Im Gehäuse 12 ist ein Fallschacht 50 angeordnet, der dem Transport der Kennzeichnungsschildersätze 38 zum Beschriftungsgerät dient. Im Fallschacht 50 ist eine Rutschbahn 52 angeordnet, auf der die Kennzeichnungsschildersätze 38 nach dem Durchtritt durch die Eintrittsöffnung 26 und die Öffnung 34 in der Deckenwand 36 fallen und welche sie hinunterrutschen, bis sie auf einer nicht näher dargestellten, in beide Raumrichtungen geneigten Halteplatte aus Glas definiert zur Anlage kommen. Das Beschriftungsgerät ist im gezeigten Ausführungsbeispiel ein Laser, der die Kennzeichnungsschilder 42 durch die Glasplatte hindurch beschriftet. Die beschrifteten Kennzeichnungsschildersätze 38 werden dann über einen weiteren Abschnitt des Fallschachts zu einer Entnahmestelle bzw. einem Aufnahmebehälter transportiert. Gemäß einem zeichnerisch nicht dargestellten alternativen Ausführungsbeispiel ist es aber auch möglich, dass der Fallschacht 50 direkt zur Entnahmestelle bzw. zum Aufnahmebehälter führt, während die Kennzeichnungsschilder 42 mittels des Beschriftungsgeräts durch die Eintrittsöffnung 26 hindurch beschriftet werden. Das Beschriftungsgerät ist dann auf die Eintrittsöffnung 26 gerichtet und beschriftet die Kennzeichnungsschilder 42 des jeweils zu unterst im Magazin 14 liegenden Kennzeichnungsschildersatzes 38.

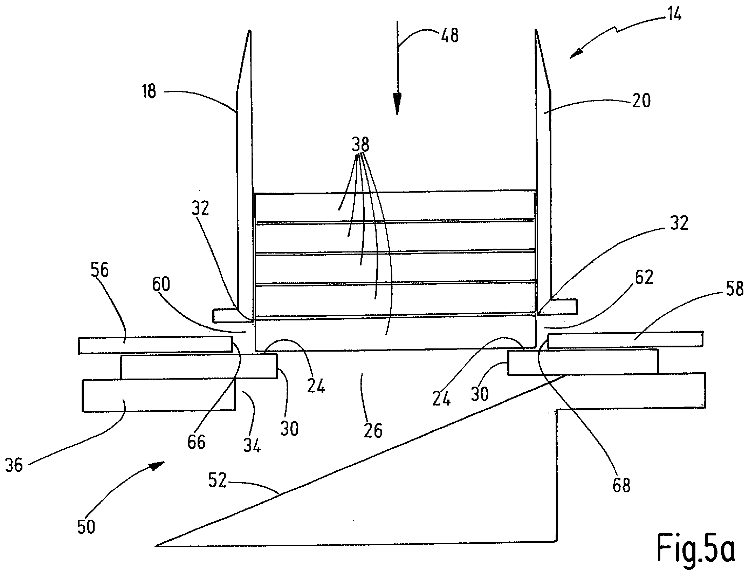

Um die Kennzeichnungsschildersätze 38 einzeln in den Fallschacht zu befördern, ist eine Schieberanordnung 54 vorgesehen, die im hier gezeigten Ausführungsbeispiel zwei Schieberelemente 56, 58 aufweist. Das erste Schieberelement 56 ist kammartig ausgebildet mit drei starr miteinander verbundenen Platten zur Beaufschlagung der Beschriftungsplättchen 46 und ist im Bereich der ersten Führungswand 18 durch Schlitze 60 in der ersten Führungswand 18 durchgreifend über der Auflagefläche 24 angeordnet. Das zweite Schieberelement 58 hat die Form einer dünnen Platte und ist im Bereich der zweiten Führungswand 20 durch einen Schlitz 62 in der zweiten Führungswand 20 durchgreifend über der Auflagefläche 24 angeordnet. Die Schieberanordnung 54 weist zudem einen die Schieberelemente 56, 58 starr miteinander verbindenden Rahmen 64 auf, der das erste Schieberelement 56 in einem Abstand zum zweiten Schieberelement 58 hält, der größer ist als der Abstand der unteren Ränder 32 der Führungswände 18, 20 zueinander und somit größer als die Länge der Kennzeichnungsschildersätze 38. Die Funktionsweise der Schieberanordnung 54 wird dabei in Fig. 5a bis e schematisch veranschaulicht.

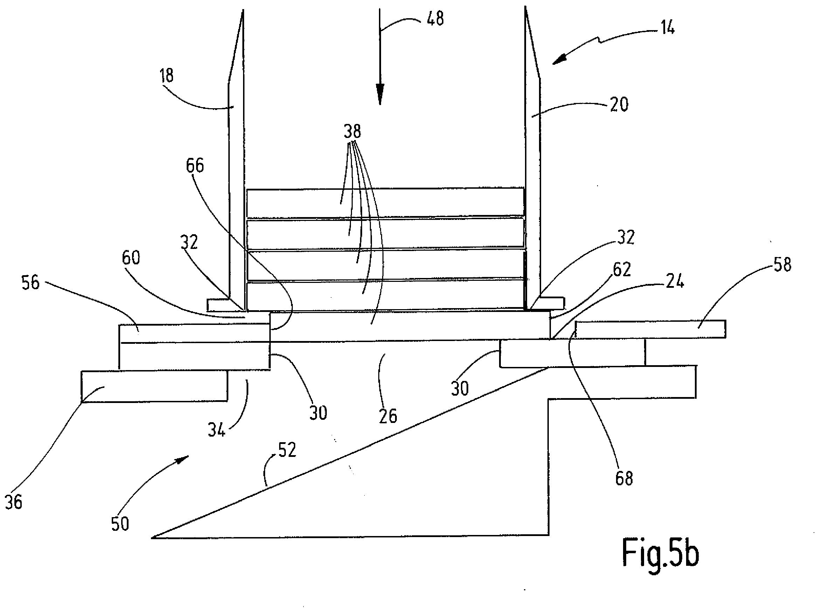

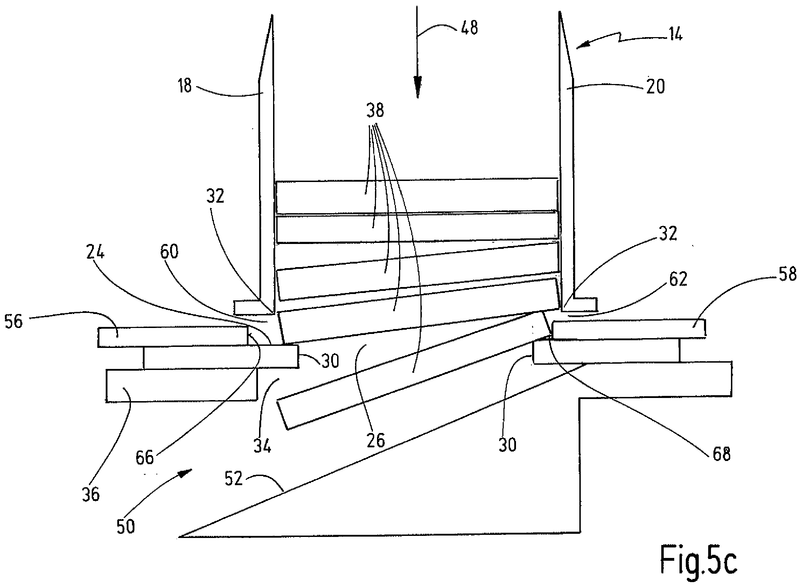

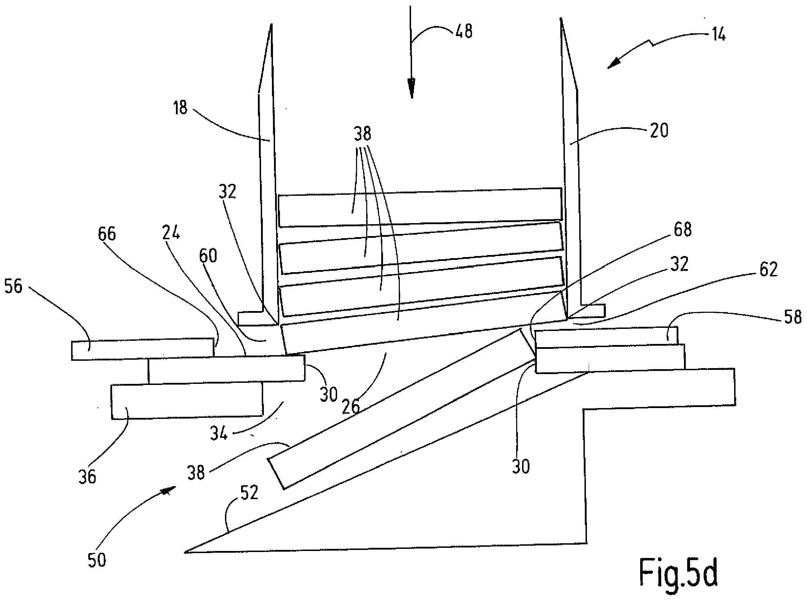

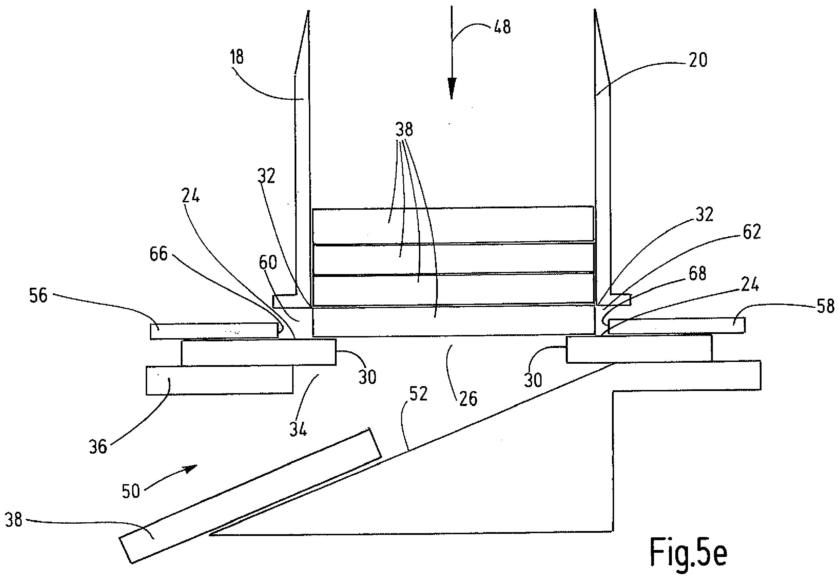

Fig. 5a zeigt die Ausgangsstellung, in der beispielhaft fünf Kennzeichnungsschildersätze 38 im Magazin 14 aufgenommen sind, welche übereinander liegen und wobei der unterste Kennzeichnungsschildersatz 38 auf den die Eintrittsöffnung 26 links und rechts begrenzenden Abschnitten der Auflagefläche 24 aufliegt. Die Schieberelemente 56, 58 sind ebenfalls in ihrer Ausgangsstellung und liegen ebenfalls jeweils auf der Auflagefläche 24 auf. In einem ersten Schritt (Fig. 5b) wird die Schieberanordnung 54 linear nach rechts bewegt, so dass das erste Schieberelement 56 in eine Vorschubposition gelangt, in der seine der Eintrittsöffnung 26 zugewandte vordere Kante 66 mit dem linken Randabschnitt 30 fluchtet oder ein wenig über die Eintrittsöffnung 26 übersteht. Die Schieberelemente 56, 58 weisen senkrecht zur Auflagefläche 24 und damit auch senkrecht zur Förderrichtung 48 eine Dicke auf, die geringer ist als die Dicke der Kennzeichnungsschildersätze 38, so dass sie nur am untersten Kennzeichnungsschildersatz 38 angreifen und diesen gegenüber den anderen Kennzeichnungsschildersätzen 38 verschieben. Einer Verschiebung der weiteren Kennzeichnungsschildersätze 38 wirken die Führungswände 18, 20 entgegen. Bei der Verschiebung des untersten Kennzeichnungsschildersatzes 38 taucht dessen rechtes Ende in den Schlitz 62 der zweiten Führungswand 20 ein, durch den auch das zweite Schieberelement 58 durchführbar ist. Das linke Ende kippt, wie in Fig. 5c schematisch dargestellt, nach unten in die Eintrittsöffnung 26, während die Schieberanordnung 54 in die entgegengesetzte Richtung bewegt wird, so dass der unterste Kennzeichnungsschildersatz 38 in die Eintrittsöffnung 26 geschoben wird. In Fig. 5d ist dargestellt, wie das zweite Schieberelement 58 in seiner Vorschubposition mit dem rechten Randabschnitt 30 fluchtend angeordnet ist, so dass der unterste Kennzeichnungsschildersatz 38 vollständig in der Eintrittsöffnung 26 verschwindet und auf die Rutschbahn 52 fällt. Fig. 5e zeigt wiederum die Ausgangsposition, in der die oberen vier Kennzeichnungsschildersätze nach unten durchgerutscht sind und der durch die Eintrittsöffnung 26 durchgeschobene Kennzeichnungsschildersatz die Rutschbahn 52 hinunterrutscht.

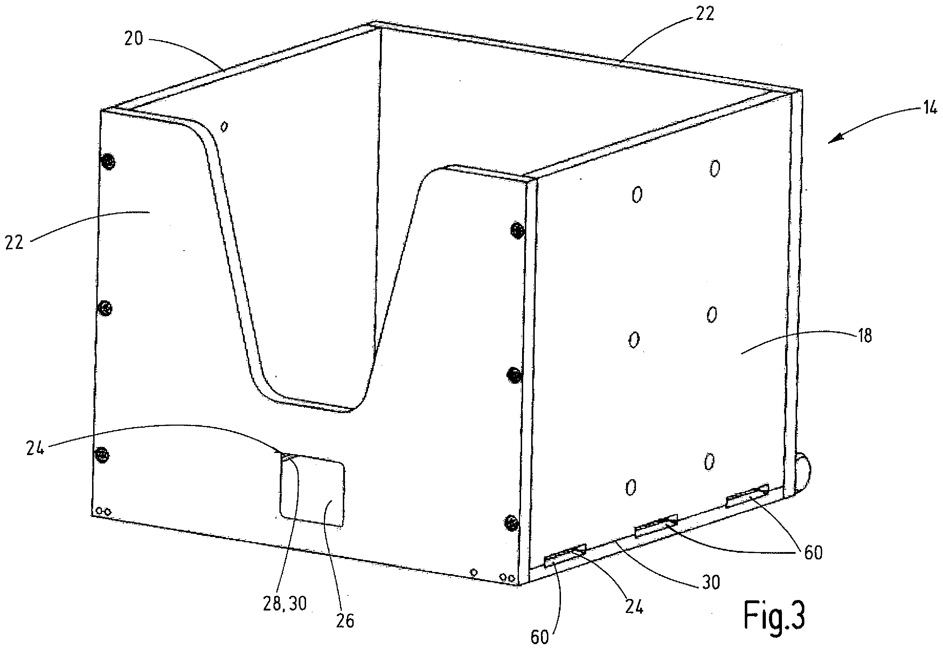

Das oben beschriebene Prinzip ist nicht nur dann anwendbar, wenn, wie im in Fig. 1a, 1b gezeigten Ausführungsbeispiel, die Förderrichtung 48 senkrecht nach unten verläuft. Es ist vielmehr auch möglich, dass die Förderrichtung 48 beispielsweise auch in horizontaler Richtung verläuft, wobei dann aber die Schwerkraft für den Transport der Kennzeichnungsschildersätze 38 durch die Eintrittsöffnung 26 hindurch in den Fallschacht 50 nicht in Frage kommt. In Fig. 4 ist ein alternatives Ausführungsbeispiel für das Magazin 114 dargestellt, bei dem die Förderrichtung 48 horizontal verläuft. Es ist nahezu identisch mit dem in Fig. 1a, 1b, 3 dargestellten Magazin 14 gemäß dem ersten Ausführungsbeispiel, so dass gleiche Teile mit gleichen Bezugszeichen versehen sind. Es weist jedoch zusätzlich einen Deckel 70 auf, gegen den eine Druckfeder 72 abgestützt ist, welche eine Vorschubplatte 74 trägt, die mittels der Feder 72 die Kennzeichnungsschildersätze 38 in der Förderrichtung 48 mit Kraft beaufschlagt. Die Kraft der Feder 72 ersetzt dabei die Schwerkraft.

Es versteht sich von selbst, dass gegenüber den gezeigten Ausführungsbeispielen zahlreiche Veränderungen möglich sind. So kann die Förderrichtung 48 auch in einem beliebigen Winkel zur Horizontalen geneigt sein. Insbesondere bei einer Neigung der Förderrichtung 48 in einem spitzen Winkel zur Horizontalen, beispielsweise in einem Winkel von 30° bis 45°, ist es möglich, dass nur eines der Schieberelemente 56 vorhanden ist, das dann die Kennzeichnungsschildersätze 38 in einem ersten Schritt die Auflagefläche 24 schräg nach oben schiebt. Beim Zurückrutschen des Kennzeichnungsschildersatzes 38 aufgrund der Schwerkraft nach Rückzug des Schieberelements 56 kann dieser selbsttätig in die Eintrittsöffnung 26 fallen, ohne dass das zweite Schieberelement 58 benötigt wird. Desweiteren kann eine Sicherheitsschaltung vorgesehen sein, die das Beschriftungsgerät ausschaltet, wenn das Magazin 14, 114 nicht hinreichend lichtdicht verschlossen ist, insbesondere dann, wenn der Deckel 70 abgehoben wird. Dies ist insbesondere dann vorteilhaft, wenn ein Laserbeschriftungsgerät auf den Kennzeichnungsschildersatz 38 gerichtet ist, der im Magazin 14, 114 der Eintrittsöffnung 26 am nächsten angeordnet ist, da dessen Laserlicht zwischen den Kennzeichnungsschildern 42 durchdringen kann. Die Führungswände 18, 20 müssen zudem nicht zwingend parallel zueinander verlaufen, sondern sie können entlang der Förderrichtung 48 ihren gegenseitigen Abstand verringern, insbesondere bis ihre unteren Ränder 32 einen Abstand zueinander aufweisen, der der Länge der Kennzeichnungsschildersätze 38 entspricht. Es ist zudem nicht zwingend, dass die Auflagefläche 24 Bestandteil des Magazins 14, 114 ist, sondern sie kann auch an der Deckenwand 36 des Gehäuses 12 angeordnet sein. Insbesondere in diesem Fall ist es möglich, dass der Abstand der Randabschnitte 30 zueinander veränderlich ist, so dass die Vorrichtung 10 für Kennzeichnungsschildersätze oder andere Kennzeichnungseinheiten unterschiedlicher Größe verwendbar ist. Schließlich ist es möglich, dass der Abstand der Führungswände 18, 20 zueinander veränderlich ist, um das Magazin 14, 114 an die Größe verschiedener Kennzeichnungsschildersätze 38 anzupassen. Zu guter Letzt ist festzuhalten, dass nicht nur Kennzeichnungsschildersätze 38 im Magazin 14, 114 aufgenommen werden können, sondern auch andere Kennzeichnungseinheiten, die beispielsweise nur aus einem großen Kennzeichnungsschild bestehen.

Zusammenfassend ist folgendes festzuhalten: Die Erfindung betrifft eine Vorrichtung 10 zur Beschriftung von Kennzeichnungseinheiten 38, wobei jede Kennzeichnungseinheit 38 ein Kennzeichnungsschild 42 oder mehrere einstückig zusammenhängende Kennzeichnungsschilder 42 aufweist, wobei jedes Kennzeichnungsschild 42 eine Beschriftungsfläche 44 aufweist und wobei die Beschriftungsfläche 44 oder mehrere der Beschriftungsflächen 44 jeder Kennzeichnungseinheit 38 eine Beschriftungsebene aufspannt bzw. aufspannen, mit einem Magazin 14, 114 zur Aufnahme einer Vielzahl von mit parallel zueinander ausgerichteten Beschriftungsebenen aneinander anliegenden Kennzeichnungseinheiten 38, das zwei im Abstand zueinander parallel verlaufende oder entlang einer senkrecht zu den Beschriftungsebenen verlaufenden Förderrichtung 48 den gegenseitigen Abstand verringernde Führungswände 18, 20 für die Kennzeichnungseinheiten 38 aufweist, mit einer in der Förderrichtung 48 nach den Führungswänden 18, 20 angeordneten Auflagefläche 24 für die Kennzeichnungseinheiten 38, mit einem Beschriftungsgerät zur Beschriftung der Beschriftungsflächen 44, mit einem über eine Eintrittsöffnung 26 in der Auflagefläche 24 zugänglichen Fallschacht 50 zum Transport der Kennzeichnungseinheiten 38 zum Beschriftungsgerät und/oder zu einer Entnahmestelle, wobei der Umfangsrand 28 der Eintrittsöffnung 26 zwei einander gegenüberliegende Randabschnitte 30 aufweist, deren Abstand zueinander kleiner ist als der Abstand der der Auflagefläche 24 zugewandten Ränder 32 der Führungswände 18, 20 zueinander, und mit einer über der Auflagefläche 24 angeordneten, mindestens ein Schieberelement 56, 58 aufweisenden Schieberanordnung 54, wobei das mindestens eine Schieberelement 56, 58 von einer Rückzugsposition im Abstand zu einem zugehörigen Randabschnitt 30 in eine Vorschubposition verschiebbar ist, in der seine der Eintrittsöffnung 26 zugewandte Kante 66, 68 mit dem zugehörigen Randabschnitt 30 fluchtet oder über diesen hinausragt.

### Bezugszeichenliste:

- 10: Beschriftungsvorrichtung
- 12: Gehäuse
- 14: Magazin
- 16: Rasthaken
- 18, 20: Führungswände
- 22: Querwand
- 24: Auflagefläche
- 26: Eintrittsöffnung
- 28: Umfangsrand
- 30: Randabschnitt
- 32: unterer Rand
- 34: Öffnung
- 36: Deckenwand
- 38: Kennzeichnungsschildersatz
- 40: Träger
- 42: Kennzeichnungsschild
- 44: Beschriftungsfläche
- 46: Beschriftungsplättchen
- 48: Förderrichtung
- 50: Fallschacht
- 52: Rutschbahn
- 54: Schieberanordnung
- 56, 58: Schieberelement
- 60, 62: Schlitz
- 64: Rahmen
- 66, 68: Kante
- 70: Deckel
- 72: Druckfeder
- 74: Vorschubplatte
- 114: Magazin

## Patentansprüche

1. Vorrichtung zur Beschriftung von Kennzeichnungseinheiten (38), wobei jede Kennzeichnungseinheit (38) ein Kennzeichnungsschild (42) oder mehrere einstückig zusammenhängende Kennzeichnungsschilder (42) aufweist, wobei jedes Kennzeichnungsschild (42) eine Beschriftungsfläche (44) aufweist und wobei die Beschriftungsfläche (44) oder mehrere der Beschriftungsflächen (44) jeder Kennzeichnungseinheit (38) eine Beschriftungsebene aufspannt bzw. aufspannen, mit einem Magazin (14, 114) zur Aufnahme einer Vielzahl von mit parallel zueinander ausgerichteten Beschriftungsebenen aneinander anliegenden Kennzeichnungseinheiten (38), das zwei im Abstand zueinander parallel verlaufende oder entlang einer senkrecht zu den Beschriftungsebenen verlaufenden Förderrichtung (48) den gegenseitigen Abstand verringernde Führungswände (18, 20) für die Kennzeichnungseinheiten (38) aufweist, mit einer in der Förderrichtung (48) nach den Führungswänden (18, 20) angeordneten Auflagefläche (24) für die Kennzeichnungseinheiten (38), mit einem Beschriftungsgerät zur Beschriftung der Beschriftungsflächen (44), mit einem über eine Eintrittsöffnung (26) in der Auflagefläche (24) zugänglichen Fallschacht (50) zum Transport der Kennzeichnungseinheiten (38) zum Beschriftungsgerät und/oder zu einer Entnahmestelle, wobei der Umfangsrand (28) der Eintrittsöffnung (26) zwei einander gegenüberliegende Randabschnitte (30) aufweist, deren Abstand zueinander kleiner ist als der Abstand der der Auflagefläche (24) zugewandten Ränder (32) der Führungswände (18, 20) zueinander, und mit einer über der Auflagefläche (24) angeordneten, mindestens ein Schieberelement (56, 58) aufweisenden Schieberanordnung (54), wobei das mindestens eine Schieberelement (56, 58) von einer Rückzugsposition im Abstand zu einem zugehörigen Randabschnitt (30) in eine Vorschubposition verschiebbar ist, in der seine der Eintrittsöffnung (26) zugewandte Kante (66, 68) mit dem zugehörigen Randabschnitt (30) fluchtet oder über diesen hinausragt.

2. Vorrichtung nach Anspruch 1, **dadurch gekennzeichnet, dass** das mindestens eine Schieberelement (56, 58) senkrecht zur Auflagefläche (24) gemessen eine geringere Dicke aufweist als die Kennzeichnungseinheiten (38).

3. Vorrichtung nach Anspruch 1 oder 2, **dadurch gekennzeichnet, dass** die Schieberanordnung (54) zwei Schieberelemente (56, 58) aufweist, die in einem Abstand zueinander angeordnet sind, der größer ist als der gegenseitige Abstand der Randabschnitte (30) und diesen vorzugsweise um mindestens 1 cm übersteigt, und dass jedes der Schieberelemente (56, 58) von einer Rückzugsposition im Abstand zum zugehörigen Randabschnitt (30) in eine Vorschubposition verschiebbar ist, in der seine der Eintrittsöffnung (26) zugewandte Kante (66, 68) mit dem zugehörigen Randabschnitt (30) fluchtet oder über diesen hinausragt.

4. Vorrichtung nach Anspruch 3, **dadurch gekennzeichnet, dass** der gegenseitige Abstand der Schieberelemente (56, 58) mindestens so groß ist wie der gegenseitige Abstand der der Auflagefläche (24) zugewandten Ränder (32) der Führungswände (18, 20).

5. Vorrichtung nach Anspruch 3 oder 4, **dadurch gekennzeichnet, dass** die Schieberelemente (56, 58) starr miteinander verbunden sind und vorzugsweise einstückig zusammenhängen.

6. Vorrichtung nach einem der vorangehenden Ansprüche, **dadurch gekennzeichnet, dass** das mindestens eine Schieberelement (56, 58) durch mindestens einen Schlitz (60, 62) in der zugehörigen Führungswand (18, 20) durchgreift.

7. Vorrichtung nach einem der vorangehenden Ansprüche, **dadurch gekennzeichnet, dass** die einander gegenüberliegenden Randabschnitte (30) zur Variation der Größe der Eintrittsöffnung (26) gegeneinander beweglich sind.

8. Vorrichtung nach einem der vorangehenden Ansprüche, **gekennzeichnet durch** ein das Beschriftungsgerät und den Fallschacht (50) umschließendes Gehäuse (12), wobei das Magazin (14, 114) lösbar mit dem Gehäuse (12) verbunden ist oder lose in eine Halterung am Gehäuse (12) eingesetzt ist.

9. Vorrichtung nach einem der vorangehenden Ansprüche, **dadurch gekennzeichnet, dass** die Auflagefläche (24) als Teil des Magazins (14, 114) fest mit den Führungswänden (18, 20) verbunden ist.

10. Vorrichtung nach einem der vorangehenden Ansprüche, **dadurch gekennzeichnet, dass** die Führungswände (18, 20) senkrecht oder schräg von oben nach unten verlaufen und dass die Auflagefläche (24) unter den Führungswänden (18, 20) angeordnet ist.

11. Vorrichtung nach einem der Ansprüche 1 bis 9, **dadurch gekennzeichnet, dass** die Auflagefläche (24) gegen die Horizontale geneigt und vorzugsweise vertikal ausgerichtet ist.

12. Vorrichtung nach einem der vorangehenden Ansprüche, **dadurch gekennzeichnet, dass** das Magazin (114) ein federunterstütztes Vorschubelement (74) zum Verschieben der Kennzeichnungseinheiten (38) in der Förderrichtung (48) und zum Andrücken der Kennzeichnungseinheiten (38) an die Auflagefläche (24) aufweist.

13. Vorrichtung nach einem der vorangehenden Ansprüche, **dadurch gekennzeichnet, dass** eine erste der Führungswände (18) zwei in Richtung zur zweiten Führungswand (20) vorstehende, sich im Abstand zueinander in der Förderrichtung (48) erstreckende Führungsrippen aufweist.

14. Vorrichtung nach Anspruch 13, **dadurch gekennzeichnet, dass** sich der Abstand der Führungsrippen zueinander in Richtung zur ersten Führungswand (18) verkleinert.

15. Vorrichtung nach einem der vorangehenden Ansprüche, **dadurch gekennzeichnet, dass** im Fallschacht (50) eine gegenüber der Horizontalen geneigte schiefe Ebene als Rutschbahn (52) für die Kennzeichnungseinheiten (38) angeordnet ist.

## Claims

1. Device for inscription of identification units (38),
wherein each identification unit (38) has one identification plaque (42) or several identification plaques (42) joined together in one piece, wherein each identification plaque (42) has an inscription surface (44) and wherein the inscription surface (44) or several of the inscription surfaces (44) of each identification unit (38) spans or span an inscription plane, with a magazine (14, 114) for receiving of a large number of identification units (38) resting on one another with their inscription planes aligned parallel to one another, which magazine has, for the identification units (38), two guide walls (18, 20), which run parallel at a spacing relative to one another or which decrease the mutual spacing along a transport direction (48) running perpendicular to the inscription planes, with a support surface (24) for the identification units (38) disposed in the transport direction (48) downstream from the guide walls (18, 20), with an inscription instrument for inscription of the inscription surfaces (44), with a chute (50) accessible via an inlet opening (26) in the support surface (24) for transport of the identification units (38) to the inscription instrument and/or to a removal point, wherein the peripheral rim (28) of the inlet opening (26) has two rim portions (30), which are disposed opposite one another and the spacing of which relative to one another is smaller than the spacing, relative to one another, of the rims (32) of the guide walls (18, 20) turned toward the support surface (24), and with a pusher arrangement (54) disposed above the support surface (24)and having at least one pusher element (56, 58), wherein the at least one pusher element (56, 58) is displaceable from a retracted position at a spacing from the associated rim portion (30) into a forward position, in which its edge (66, 68) turned toward the inlet opening (26) is flush with the associated rim portion (30) or projects beyond this.

2. Device according to claim 1, **characterized in that** the at least one pusher element (56, 58) has a smaller thickness, measured perpendicular to the support surface (24), than the identification units (38).

3. Device according to claim 1 or 2, **characterized in that** the pusher arrangement (54) has two pusher elements (56, 58) disposed at a spacing relative to one another that is larger than the mutual spacing of the rim portions (30)and preferably exceeds this by at least 1 cm, and **in that** each of the pusher elements (56, 58) is displaceable from a retracted position at a spacing from the associated rim portion (30) to a forward position, in which its edge (66, 68) turned toward the inlet opening (26) is flush with the associated rim portion (30) or projects beyond this.

4. Device according to claim 3, **characterized in that** the mutual spacing of the pusher elements (56, 58) is at least as large as the mutual spacing of the rims (32) of the guide walls (18, 20) turned toward the support surface (24).

5. Device according to claim 3 or 4, **characterized in that** the pusher elements (56, 58) are rigidly connected to one another and preferably are joined together in one piece.

6. Device according to one of the preceding claims, **characterized in that** the at least one pusher element (56, 58) engages through at least one slot (60, 62) in the associated guide wall (18, 20).

7. Device according to one of the preceding claims, **characterized in that** the rim portions (30) disposed opposite one another are movable relative to one another for variation of the size of the inlet opening (26).

8. Device according to one of the preceding claims, **characterized by** a housing (12) enclosing the inscription instrument and the chute (50), wherein the magazine (14, 114) is connected detachably with the housing (12) or is inserted loose into a holder on the housing (12).

9. Device according to one of the preceding claims, **characterized in that** the support surface (24), as part of the magazine (14, 114), is securely connected with the guide walls (18, 20).

10. Device according to one of the preceding claims, **characterized in that** the guide walls (18, 20) run perpendicularly or in sloping manner from top to bottom, and **in that** the support surface (24) is disposed under the guide walls (18, 20).

11. Device according to one of claims 1 to 9, **characterized in that** the support surface (24) is inclined relative to the horizontal and preferably aligned vertically.

12. Device according to one of the preceding claims, **characterized in that** the magazine (114) has a spring-assisted feed element (74) for displacement of the identification units (38) in the transport direction (48) and for pressing of the identification units (38) onto the support surface (24).

13. Device according to one of the preceding claims, **characterized in that** a first of the guide walls (18) has two guide ribs protruding in the direction of the second guide wall (20) and extending at a spacing relative to one another in the transport direction (48).

14. Device according to claim 13, **characterized in that** the spacing of the guide ribs relative to one another decreases in the direction of the first guide wall (18).

15. Device according to one of the preceding claims, **characterized in that** a sloping plane inclined relative to the horizontal is disposed in the chute (50) as a slideway (52) for the identification units (38).

## Revendications

1. Dispositif de marquage d'unités de caractérisation (38), chaque unité de caractérisation (38) présentant une plaquette de caractérisation (42) ou plusieurs plaquettes de caractérisation (42) faisant corps d'un seul tenant, chaque plaquette de caractérisation (42) étant pourvue d'une surface (44) de traçage d'inscriptions, sachant que ladite surface (44) de traçage d'inscriptions ou plusieurs, parmi les surfaces (44) de traçage d'inscriptions de chaque unité de caractérisation (38), couvre(nt) l'étendue d'un plan de traçage d'inscriptions, comprenant un magasin (14, 114) affecté à la réception d'une multiplicité d'unités de caractérisation (38) attenantes les unes aux autres par des plans de traçage d'inscriptions orientés avec parallélisme mutuel, et muni de deux parois de guidage (18, 20) qui sont dédiées aux unités de caractérisation (38), s'étendent parallèlement à distance l'une de l'autre, ou diminuent l'espacement mutuel dans une direction de convoyage (48) dont le tracé est perpendiculaire auxdits plans de traçage d'inscriptions ; une surface d'appui (24), destinée auxdites unités de caractérisation (38) et située après les parois de guidage (18, 20) dans ladite direction de convoyage (48) ; un appareil de légendage, réalisé pour porter des inscriptions sur les surfaces (44) de traçage d'inscriptions ; un puits de chute (50) accessible par l'intermédiaire d'un orifice d'entrée (26) pratiqué dans ladite surface d'appui (24), et dévolu au transport des unités de caractérisation (38) vers ledit appareil de légendage et/ou vers une zone de prélèvement, le bord périphérique (28) dudit orifice d'entrée (26) comportant deux régions marginales (30) opposées l'une à l'autre, dont l'espacement mutuel est plus petit que l'espacement mutuel des bords (32) desdites parois de guidage (18, 20) qui sont tournés vers la surface d'appui (24) ; et un ensemble de poussée (54) placé au-dessus de ladite surface d'appui (24) et doté d'au moins un élément de poussée (56, 58), lequel élément de poussée (56, 58), à présence minimale, est apte à coulisser depuis un emplacement de retrait, distant d'une région marginale (30) associée, jusqu'à un emplacement d'avance auquel son arête (66, 68), tournée vers ledit orifice d'entrée (26), se trouve dans l'affleurement de ladite région marginale (30) associée, ou fait saillie au-delà de cette dernière.

2. Dispositif selon la revendication 1, **caractérisé par le fait qu'**au moins un élément de poussée (56, 58) offre, mesuré perpendiculairement à la surface d'appui (24), une épaisseur moindre que celle des unités de caractérisation (38).

3. Dispositif selon la revendication 1 ou 2, **caractérisé par le fait que** l'ensemble de poussée (54) comprend deux éléments de poussée (56, 58) mutuellement espacés d'une distance supérieure à l'espacement mutuel des régions marginales (30) et excédant, de préférence, ledit espacement d'au moins 1 cm ; et **par le fait que** chacun desdits éléments de poussée (56, 58) est apte à coulisser depuis un emplacement de retrait, distant de la région marginale (30) associée, jusqu'à un emplacement d'avance auquel son arête (66, 68), tournée vers l'orifice d'entrée (26), se trouve dans l'affleurement de ladite région marginale (30) associée, ou fait saillie au-delà de cette dernière.

4. Dispositif selon la revendication 3, **caractérisé par le fait que** l'espacement mutuel des éléments de poussée (56, 58) est au moins égal à l'espacement mutuel des bords (32) des parois de guidage (18, 20) qui sont tournés vers la surface d'appui (24).

5. Dispositif selon la revendication 3 ou 4, **caractérisé par le fait que** les éléments de poussée (56, 58) sont reliés rigidement l'un à l'autre et font, de préférence, corps d'un seul tenant.

6. Dispositif selon l'une des revendications précédentes, **caractérisé par le fait que** l'élément de poussée (56, 58), à présence minimale, traverse au moins une fente (60, 62) pratiquée dans la paroi de guidage (18, 20) associée.

7. Dispositif selon l'une des revendications précédentes, **caractérisé par le fait que** les régions marginales (30), opposées l'une à l'autre, sont mobiles l'une vers l'autre en vue de faire varier la taille de l'orifice d'entrée (26).

8. Dispositif selon l'une des revendications précédentes, **caractérisé par** un boîtier (12) entourant l'appareil de légendage et le puits de chute (50), le magasin (14, 114) étant relié audit boîtier (12) de manière libérable ou étant inséré, avec jeu, dans un élément de retenue situé sur ledit boîtier (12).

9. Dispositif selon l'une des revendications précédentes, **caractérisé par le fait que** la surface d'appui (24) est reliée rigidement aux parois de guidage (18, 20), en tant que partie intégrante du magasin (14, 114).

10. Dispositif selon l'une des revendications précédentes, **caractérisé par le fait que** les parois de guidage (18, 20) s'étendent verticalement, ou à l'oblique de haut en bas ; et **par le fait que** la surface d'appui (24) est située au-dessous desdites parois de guidage (18, 20).

11. Dispositif selon l'une des revendications 1 à 9, **caractérisé par le fait que** la surface d'appui (24) est inclinée par rapport à l'horizontale et est, de préférence, orientée verticalement.

12. Dispositif selon l'une des revendications précédentes, **caractérisé par le fait que** le magasin (114) est muni d'un élément d'avance (74) assisté par ressort, en vue de faire coulisser les unités de caractérisation (38) dans la direction de convoyage (48), et de plaquer lesdites unités de caractérisation (38) contre la surface d'appui (24).

13. Dispositif selon l'une des revendications précédentes, **caractérisé par le fait qu'**une première paroi (18), au sein des parois de guidage, est dotée de deux nervures de guidage qui font saillie en direction de la seconde paroi de guidage (20) et s'étendent, à distance l'une de l'autre, dans la direction de convoyage (48).

14. Dispositif selon la revendication 13, **caractérisé par le fait que** l'espacement mutuel des nervures de guidage décroît en direction de la première paroi de guidage (18).

15. Dispositif selon l'une des revendications précédentes, **caractérisé par le fait qu'**un plan oblique, incliné par rapport à l'horizontale et matérialisant un toboggan (52) affecté aux unités de caractérisation (38), est situé dans le puits de chute (50).
